# EUROPÄISCHE PATENTSCHRIFT

(11) **EP 2 128 431 B1**
(45) Veröffentlichungstag und Bekanntmachung des Hinweises auf die Patenterteilung: **23.10.2013**
(21) Anmeldenummer: 09006175.5
(22) Anmeldetag: 06.05.2009
(51) Int. Cl.: F03D 1/00, F03D 11/04, E04H 12/34

(54) **Verfahren und Vorrichtung zur Montage eines modulartigen Bauwerks, wie einer Windenergieanlage**
Method and device for mounting a module-type structure such as a wind energy plant
Procédé et dispositif de montage d'une structure modulaire, comme une éolienne

(30) Priorität: 07.05.2008 DE 102008022654
(43) Veröffentlichungstag der Anmeldung: 02.12.2009
(73) Patentinhaber: Berg, Mario, 68804 Altlußheim (DE)
(72) Erfinder: Berg, Mario, 68804 Altlußheim (DE)
(74) Vertreter: Lenz, Steffen

(56) Entgegenhaltungen:
- EP-B1- 1 057 770
- DE-A1- 10 212 305
- DE-A1- 10 234 299
- JP-A- 2005 120 775
- JP-A- 2006 207 502

## Beschreibung

Die Erfindung betrifft ein Verfahren zur Montage eines aus mehreren übereinander angeordneten Modulen gebildeten Bauwerks, wie einer Windenergieanlage oder dergleichen, wobei zunächst ein erstes Modul des Bauwerks aufgestellt und sodann wenigstens ein weiteres Bauwerkmodul auf das erste Bauwerkmodul bzw. auf bereits errichtete Bauwerkmodule aufgesetzt wird, indem zumindest das wenigstens eine weitere Bauwerkmodul mittels einer Hubgondel derart auf das Niveau seiner Montageposition nach oben verfahren wird, dass ein Kontakt der Hubgondel mit dem/den bereits errichteten Bauwerkmodul(en) zumindest während der Verlagerung der Hubgondel vermieden wird. Die Erfindung ist ferner auf eine zur Durchführung eines solchen Verfahrens geeignete Vorrichtung zur Montage eines aus mehreren übereinander angeordneten Modulen gebildeten Bauwerks, wie einer Windenergieanlage oder dergleichen, gerichtet, mit einem Hilfsmast und einer hieran geführten Hubgondel, welche zwischen einer ersten Position, in welcher sie ein zu montierendes Bauwerkmodul aufzunehmen vermag, und einer zweiten Position auf dem Niveau der Montageposition des zu montierenden Bauwerkmoduls auf einem bereits errichteten Bauwerkmodul verlagerbar ist, wobei die Hubgondel derart geführt ist, dass ein Kontakt der Hubgondel mit dem/den bereits errichteten Bauwerkmodul(en) zumindest während der Verlagerung der Hubgondel entlang dem Hilfsmast vermieden wird.

Modulartige Bauwerke der vorgenannten Art sind insbesondere in Form von Windenergieanlagen, aber auch in Form von Fernseh-/Rundfunktürmen, Brücken - bzw. genauer: Brückenpfeilern - etc. in vielfältiger Ausgestaltung bekannt. Insbesondere Windenergieanlagen gewinnen dabei aufgrund sich verknappenden fossilen Brennstoffen an zunehmender Bedeutung, was dazu führt, dass ihre Dimensionen immer größer und leistungsfähiger werden und ihr Errichtungsort einerseits in Regionen mit möglichst anhaltendem Wind, andererseits in möglichst dünn besiedeltem Gebieten gewählt wird, um rentabel zu sein und die Bevölkerung möglichst wenig zu beeinträchtigen. Die zunehmenden Dimensionen sowie oft nur sehr schwer zugängliche Errichtungsorte, wie insbesondere auch auf See (sogenannte Offshore-Anlagen), bringen teils erhebliche Probleme hinsichtlich der Montage solcher Anlagen sowie gegebenenfalls hinsichtlich einer Demontage derselben mit sich. Entsprechendes gilt selbstverständlich für ähnlich groß dimensionierte Bauwerke der oben genannten Art.

Windenergieanlagen umfassen in der Regel ein Bauwerk aus mehreren übereinander angeordneten Bauwerkmodulen, welche z.B. aus geschweißtem Stahlrohr, Gitterträgern oder Stahlbetonelementen gebildet sein können. Zur Verbindung der Bauwerkmodule können diese an ihren Enden mit entsprechenden Befestigungsflanschen ausgestattet sein, welche in der Regel innenseitig der hohlen Module angeordnet sind, um für eine leichtere Zugänglichkeit, z.B. durch eine innenseitige Treppe oder Leiter, anlässlich des Verschraubens durch einen Monteur sowie für einen optisch einheitlichen Gesamteindruck zu sorgen. Die Bauwerkmodule selbst können entweder zylindrisch, insbesondere kreiszylindrisch, oder konisch, sich nach oben verjüngend ausgestaltet sein. In beiden Fällen kann aus Gründen einer Materialersparnis ferner vorgesehen sein, dass sich die Wandstärke von Modul zu Modul und/oder innerhalb eines Moduls von unten nach oben verkleinert. Moderne Windenergieanlagen erreichen gegenwärtig eine Höhe von bis zu etwa 120 m und einen etwa ebenso großen Rotordurchmesser, was zu einer Leistung von bis zu etwa 5 MW führt. Die Länge der Bauwerkmodule solcher Anlagen beträgt oft in der Größenordnung von etwa 30 m, wodurch sich ein Gewicht der Bauwerkmodule von etwa 150 t ergeben kann. Die Maschinengondel, an welcher der Rotor gelagert ist, kann sogar ein Gewicht von mehreren 100 t erreichen.

Die Montage solcher Windenergieanlagen vor Ort geschieht gegenwärtig zumeist mit Hilfe von Kranen. Die Bauwerkmodule werden je nach Errichtungsort mittels spezieller Lkw oder Schiffen zu ihrem Errichtungsort verbracht, wo sie der Montagekran aufnimmt und auf ihre Montageposition anhebt, wobei sie durch den Montagekran in Position gehalten werden müssen, bis sie vollständig aneinander fixiert, insbesondere verschraubt und/oder verschweißt worden sind. Zu Lande kommen hierbei extrem große, mobile Teleskop- oder Gittermastkranen zum Einsatz, welche in der Regel eine besondere Einebnung/Verdichtung des Bodens erfordern. Zu Wasser finden spezielle Hubschiffe Verwendung, auf welchen ein entsprechender Kran errichtet ist und welche durch absenkbare Stützen auf dem Meeresgrund aufstellbar sind, so dass der Kran stationär und vom Seegang unabhängig aufgestellt ist. Es liegt auf der Hand, dass der Einsatz solcher Kranen einen erheblichen Zeit- und Kostenaufwand mit sich bringt, welcher die An- und Ablieferung des Krans selbst sowie dessen Aufbau einschließt, der beispielsweise bei der Errichtung seines Auslegers einen Einsatz von Gegengewichten erforderlich macht. Hinzukommt, dass am Errichtungsort naturgemäß oft starke Winde bzw. allgemein ungünstige Wetterverhältnisse herrschen, was nicht ausschließlich für eine Errichtung solcher Bauwerke im Offshore-Bereich gilt. Dabei kann es vorkommen, dass für einen zum Betrieb einer leistungsfähigen Windenergieanlage günstigen Standort nur wenige Monate eines Jahres überhaupt die Voraussetzungen für eine Montage bieten können. Demgegenüber erfordert jedoch die Errichtung der Anlage zumeist einige Wochen und kann sich durch ungünstige Wetterverhältnisse, bei welchen jegliche Arbeiten unterbrochen werden müssen, leicht erheblich verlängern. Schließlich stehen für die zunehmend größer dimensionierten Windenergieanlagen weltweit entsprechende Hubgeräte nur noch in sehr begrenzter Zahl zur Verfügung.

Die DE 103 08 239 A1 beschreibt ein Verfahren und eine Vorrichtung zur Errichtung einer Windenergieanlage, welche aus mehreren übereinander angeordneten Bauwerkmodulen gebildet ist, auf dessen oberem die Maschinengondel mit dem Rotor ruht. Die Errichtung der Anlage geschieht dadurch, dass bereits errichtete Bauwerkmodule jeweils so weit angehoben werden, dass das nächste Bauwerkmodul unter das untere der bereits errichteten Module eingeschoben und hieran befestigt werden kann. Es muss folglich stets das gesamte, bislang fertig gestellte Bauwerk auf ein hinreichendes Höhenniveau angehoben werden, um weitere Bauwerkmodule hinzuzufügen. Die Maschinengondel der Windenergieanlage wird dabei bereits zu Beginn auf dem zuerst errichteten - in diesem Fall oberen - Bauwerkmodul montiert, was zur Folge hat, dass sie stets mit angehoben werden muss. Die hierfür verwendete Hubeinrichtung ist entsprechend aufwändig dimensioniert und umfasst Linearführungen in der Länge eines jeweiligen Bauwerkmoduls, welche auch während der Montage angreifende Windkräfte aufnehmen müssen. Der bedeutendste Nachteil besteht indes darin, dass auch hier zumindest zum Aufsetzen der Maschinengondel auf das erste (obere) Bauwerkmodul ein Kran zwingend erforderlich ist, was die vorstehend beschriebene Problematik mit sich bringt.

Der EP 1 057 770 B1 ist ein gattungsgemäßes, insbesondere auch zur Errichtung einer Offshore-Windenergieanlage geeignetes Verfahren und eine Vorrichtung zu entnehmen. An den einzelnen Mastmodulen der Windenergieanlage sind jeweils Abschnitte einer Führungsschiene angeschweißt, so dass eine entlang bereits errichteter Mastmodule mittels eines Seilzuges angetriebene Hubgondel an den Führungsschienen geführt ist und dabei ein Kontakt der Hubgondel mit dem Mast vermieden wird, so dass die Gefahr einer Beschädigung derselben, wie insbesondere einer zum Korrosionsschutz vorgesehenen Lackierung, weitgehend vermieden wird. Nachteilig ist indes einerseits, dass auf die fest mit den Mastmodulen verbundenen Führungsschienen während der Verlagerung der Hubgondel erhebliche Querkräfte und Biegemomente wirken, welche insbesondere bei relativ großen Masten, wie sie bei Offshore-Windkraftanlagen benötigt werden, eine mit erheblichen Kosten verbundene Überdimensionierung der Mastmodule erfordern, um die bei deren Errichtung auftretenden, zusätzlichen Belastungen aufnehmen zu können. Zudem führen die nur zur Errichtung des Mastes dienenden Führungsschienen selbst zu nicht unerheblichen Mehrkosten. Andererseits erfordert die Errichtung eines solchen Mastes relativ viel Zeit, weil die auf der Hubgondel entlang der Führungsschienen nach oben transportierten Mastmodule zunächst relativ zu bereits errichteten Mastmodulen ausgerichtet und das Mastmodul sodann mit dem oberen, bereits errichteten Modul verschraubt werden muss, bevor die Hubgondel wieder entlang der Führungsschiene des zuletzt errichteten (oberen) Mastmodule verlagert werden kann.

Entsprechendes gilt weitgehend für die aus der DE 102 34 299 B4 bekannte Vorrichtung zur Montage eines modularen Turmes sowie für das dortige Verfahren zu dessen Errichtung. Auch diese Druckschrift sieht eine an den Bauwerkmodulen befestigte Führungsschiene vor, entlang derer eine Hubgondel geführt ist. Davon abgesehen, dass die Führungsschiene als solche nicht in der Lage ist, das Gewicht der einzelnen Bauwerkmodule aufzunehmen, soll die Errichtung der Führungsschiene nicht gemeinsam mit dem zugehörigen Bauwerkmodul erfolgen, sondern wird erst das Bauwerkmodul auf einem anderen befestigt, sodann die Führungsschiene unterhalb abgetrennt, mittels Seilzügen nach oben verlagert und in die dadurch entstandene Lücke ein neues Führungsschienenstück eingesetzt.

Die US 2007/0000724 A1 beschreibt schließlich eine an zwei modular aufgebauten Masten geführte Hubplattform, welche zur Errichtung, Wartung oder zur Reinigung von Bauwerken zum Einsatz kommen kann.

Der Erfindung liegt die Aufgabe zugrunde, ein Verfahren und eine Vorrichtung der eingangs genannten Art auf konstruktiv einfache und kostengünstige Weise dahingehend weiterzubilden, dass die oben genannten Nachteile zumindest weitestgehend vermieden werden.

In verfahrenstechnischer Hinsicht wird diese Aufgabe bei einem Verfahren der eingangs genannten Art dadurch gelöst, dass
- parallel zu dem zu errichtenden Bauwerk und seitlich desselben ein ebenfalls modulartig aufgebauter, selbsttragender Hilfsmast errichtet wird, wobei die Länge eines selbsttragenden Hilfsmastmoduls etwa der Länge eines Bauwerkmoduls entspricht; wobei
- ein jeweiliges selbsttragendes Hilfsmastmodul zuvor derart mit einem jeweiligen Bauwerkmodul zu einem Gesamtmodul lösbar verbunden wird, dass das selbsttragende Hilfsmastmodul eines solchen Gesamtmoduls das Gewicht dessen Bauwerkmoduls aufzunehmen vermag; und wobei
- die Gesamtmodule aus jeweils einem selbsttragenden Hilfsmastmodul und einem Bauwerkmodul mittels der Hubgondel entlang dem selbsttragenden Hilfsmast bereits errichteter Bauwerkmodule auf das Niveau der Montageposition nach oben verlagert werden, wobei beim Verlagern der Hubgondel entlang dem selbsttragenden Hilfsmast sowohl ein Kontakt der Hubgondel mit dem Bauwerk als auch eine Einleitung von durch die Hubgondel und hieran angreifendem Wind bewirkten Normal-, Quer-, Torsionskräften und Biegemomenten in das Bauwerk und somit jegliche mechanische Beschädigungen des Bauwerks vermieden werden.

Zur Lösung dieser Aufgabe sieht die Erfindung bei einer Vorrichtung der eingangs genannten Art ferner vor, dass
- der Hilfsmast selbsttragend und modulartig aufgebaut ist und parallel zu dem zu errichtenden Bauwerk und seitlich von diesem anordbar ist, wobei die Länge eines selbsttragenden Hilfsmastmoduls etwa der Länge eines Bauwerkmoduls entspricht; wobei
- ein jeweiliges selbsttragendes Hilfsmastmodul derart mit einem jeweiligen Bauwerkmodul zu einem Gesamtmodul lösbar verbindbar ist, dass das selbsttragende Hilfsmastmodul eines solchen Gesamtmoduls das Gewicht dessen Bauwerkmoduls aufzunehmen vermag; und wobei
- die Hubgondel derart an dem selbsttragenden Hilfsmast des wenigstens einen, bereits errichteten Bauwerkmoduls getührt ist, dass beim Verlagern der Hubgondel entlang dem selbsttragenden Hilfsmast sowohl ein Kontakt der Hubgondel mit dem Bauwerk als auch eine Einleitung von durch die Hubgondel und hieran angreifendem Wind bewirkten Normal-, Quer-, Torsionskräften und Biegemomenten in das Bauwerk und somit jegliche mechanische Beschädigungen des Bauwerks vermieden werden, um die aus jeweils einem selbsttragenden Hilfsmastmodul und einem Bauwerkmodul gebildeten Gesamtmodule auf das Niveau der Montageposition nach oben zu verlagern,
wobei das Hilfsmastmodul eine Höhenverstellvorrichtung zur Höhenverlagerung eines jeweiligen Bauwerkmoduls in Bezug auf dessen Hilfsmastmodul aufweist, wobei das Bauwerkmodul auf einem höheren Niveau als das Hilfsmastmodul anordbar und zumindest auf das Niveau des Hilfsmastmoduls absenkbar ist.

Vorteilhafte Ausführungen der Erfindung sind in den abhängigen Ansprüchen wiedergegeben.

Die erfindungsgemäße Ausgestaltung macht es möglich, mittels der an dem Hilfsmast geführten Hubgondel ohne eine Zuhilfenahme von Kranen schwere Lasten in Form von Bauwerkmodulen auf ein großes Höhenniveau anzuheben und dort während der Montage zu halten, wobei die Abhängigkeit von Witterungseinflüssen, insbesondere von Wind, gegenüber dem Stand der Technik erheblich reduziert wird. Insbesondere vermögen die selbsttragenden Hilfsmastmodule nicht nur sämtliche durch die Hubgondel bewirkten Gewichtskräfte, sondern auch Querkräfte, Biegemomente und Torsionskräfte aufzunehmen, so dass die Bauwerkmodule keiner zusätzlichen Belastung während ihrer Errichtung ausgesetzt sind und folglich keiner Überdimensionierung bedürfen, wobei die Bauwerkmodule zuverlässig gegen jedwede Beschädigung geschützt sind. Aufgrund dessen, dass die Hubgondel ausschließlich an dem Hilfsmast geführt ist, wird ferner ein Kontakt mit bereits errichteten Bauwerkmodulen zuverlässig verhindert, so dass keinerlei Gefahr einer Beschädigung derselben besteht, sei es ihrer in der Regel zum Korrosionsschutz vorgesehenen Lackierung oder sei es gar der Module selbst, z.B. durch plastische Verformung infolge äußerer mechanischer Einwirkung. Zugleich können die Gewichts-, Quer und Torsionskräfte sowie Biegemomente der (beladenen) Hubgondel praktisch vollständig in die Struktur des Hilfsmastes eingeleitet werden, so dass die Dimensionierung des Bauwerkes selbst nicht derart hoch gewählt werden muss, dass während der Montage zusätzliche Kräfte, wie insbesondere Drehmomente, aufgenommen werden müssen, wie sie bei einer wie auch immer gearteten Festlegung der Hubgondel unmittelbar an bereits errichteten Bauwerkmodulen oder an Führungsschienen derselben auftreten würden. Die Hilfsmastmodule lassen sich dabei an beliebige Bauwerkmodule anpassen, ohne dass an letzteren bauliche Veränderungen vorgenommen werden müssen. Der erfindungsgemäße Hilfsmast kann ferner, sofern gewünscht, nach der Errichtung des Bauwerks wieder einfach demontiert und zur Errichtung gleichartiger Bauwerke wiederverwendet und gegebenenfalls zu einem späteren Zeitpunkt, sofern beispielsweise ein Austausch der Maschinengondel und/oder der Rotorblätter der Anlage erwünscht ist, erneut montiert/demontiert werden. Ein weiterer Vorteil besteht darin, dass lediglich die Hilfsmastmodule aneinander befestigt werden müssen, um die Maschinengondel entlang derselben zu verlagern, während gemäß dem Stand der Technik hierfür eine vollständige Montage der Bauwerkmodule selbst erforderlich ist, was mit einer erheblichen Zeitersparnis während der Errichtung des Bauwerkes einhergeht, weil z.B. das zuletzt errichtete (obere) Bauwerkmodul noch verschraubt werden kann, während dessen Hilfsmastmodul bereits von der Hubgondel überfahren werden kann, um das nächste Modul nach oben in seine Montageposition zu bringen. Schließlich können die Hilfsmastmodule insbesondere auch als "Transportbehälter" für die Bauwerkmodule dienen, so dass die aus jeweils einem Bauwerkmodul und einem Hilfsmastmodul gebildeten Gesamtmodule unter zuverlässigem Schutz der Bauwerkmodule an ihren Errichtungsort transportiert und mittels der Hubgondel in ihre Montageposition verbracht werden können.

Weitere Merkmale und Vorteile der Erfindung ergeben sich aus der nachfolgenden Beschreibung von Ausführungsbeispielen der Erfindung unter Bezugnahme auf die Zeichnungen. Dabei zeigen:
- Fig. 1: eine schematische Ansicht einer Ausführungsform Vorrichtung zur Montage eines aus mehreren übereinander angeordneten Modulen gebildeten Bauwerks an einem solchen Bauwerk in Form einer Windenergieanlage;
- Fig. 2: eine schematische Detailansicht einer Ausführungsform der Führung der Hubgondel der Vorrichtung gemäß Fig. 1 an deren Hilfsmast;
- Fig. 3: eine schematische Querschnittsansicht der Vorrichtung gemäß Fig. 2 entlang der Schnittlinie III-III in Fig. 2;
- Fig. 4: schematische Detailansichten alternativer Ausführungsformen des Antriebs der Hubgondel;
- Fig. 5: jeweils eine schematische Ansicht eines aus einem Bauwerkmodul und einem Hilfsmastmodul gebildeten Gesamtmodul;
- Fig. 6: jeweils eine schematische Ansicht von Ausführungsformen eines Blockierelementes der Hubgondel an dem Hilfsmast;
- Fig. 7: eine schematische Ansicht eines Hilfsmastmoduls mit weiteren, insbesondere für Wartungs- und Reparaturarbeiten an dem Bauwerk geeigneten Einrichtungen;
- Fig. 8: eine schematische Ansicht zur Veranschaulichung der Anordnung der Hubgondel am Fundament eines zu errichtenden Bauwerkes;
- Fig. 9: eine schematische Ansicht der Hubgondel, welche die zu montierende Maschinengondel einer Windenergieanlage trägt; und
- Fig. 10: eine schematische Ansicht eines Hilfsmastmoduls mit einer separaten Hubeinrichtung zur Halterung und vertikalen Verlagerung eines Rotorblattes der Windenergieanlage.

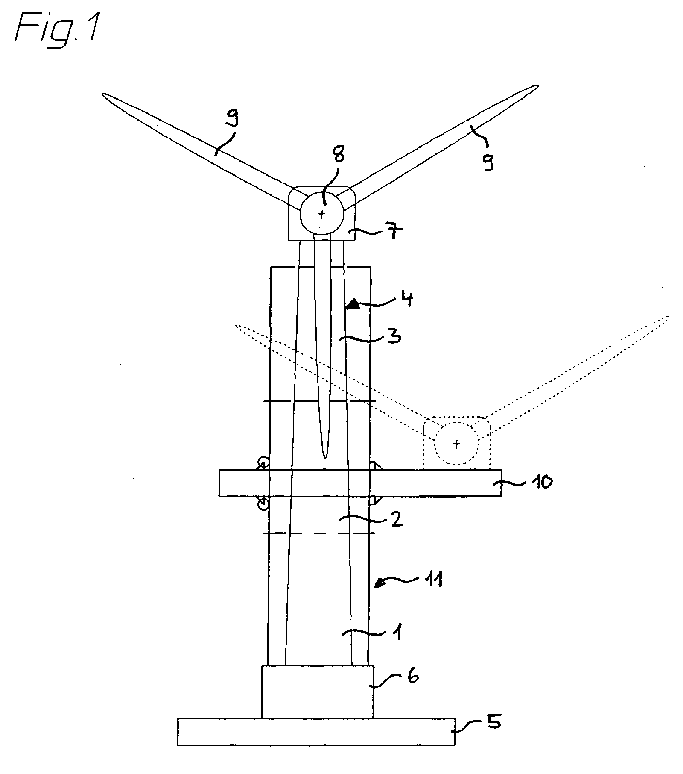

In Fig. 1 ist ein aus mehreren übereinander angeordneten - im vorliegenden Fall drei - Modulen 1, 2, 3 gebildetes Bauwerk 4 in Form einer Windenergieanlage wiedergegeben, welche auf einem auf einem Fundament 5 angeordneten Gründungsstruktur 6 ruht. Auf dem oberen Bauwerkmodul 3 befindet sich eine Maschinengondel 7 der Windenergieanlage, an welcher eine Welle 8 mit beispielsweise drei Rotorblättern 9 drehbar gelagert ist. Bei der Windenergieanlage kann es sich um eine zu Land oder zu Wasser errichtete Anlage, wie um eine sogenannte Offshore-Anlage handeln.

Fig. 1 zeigt des Weiteren eine Vorrichtung zur Montage des Bauwerkes 4, mittels welcher letzteres errichtet worden ist. Die Vorrichtung umfasst eine Hubgondel 10, welche zwischen einer ersten Position, in welcher sie ein zu montierendes Bauwerkmodul - hier die strichpunktiert dargestellte Maschinengondel mit zwei Rotorblättern - aufzunehmen vermag (also im Bereich des unteren Abschnittes des unteren Bauwerkmoduls 1), und einer zweiten Position auf dem Niveau der Montageposition des zu montierenden Bauwerkmoduls (also im Bereich des oberen Abschnittes des bereits errichteten, oberen Bauwerkmoduls 3) verlagerbar ist. Die Hubgondel 10 ist dabei an einem seitlich des Bauwerkes 4 angeordneten Hilfsmast 11 geführt, so dass beim Verlagern der Hubgondel 10 entlang dem Hilfsmast 11 sowohl ein Kontakt der Hubgondel 10 mit dem Bauwerk 4 als auch eine Einleitung von durch die (beladene) Hubgondel 10 und hieran angreifenden Wind bewirkte Normal-, Quer-, Torsionskräfte und Biegemomente in das Bauwerk 4 und somit jegliche mechanische Beschädigungen des Bauwerks 4 vermieden werden.

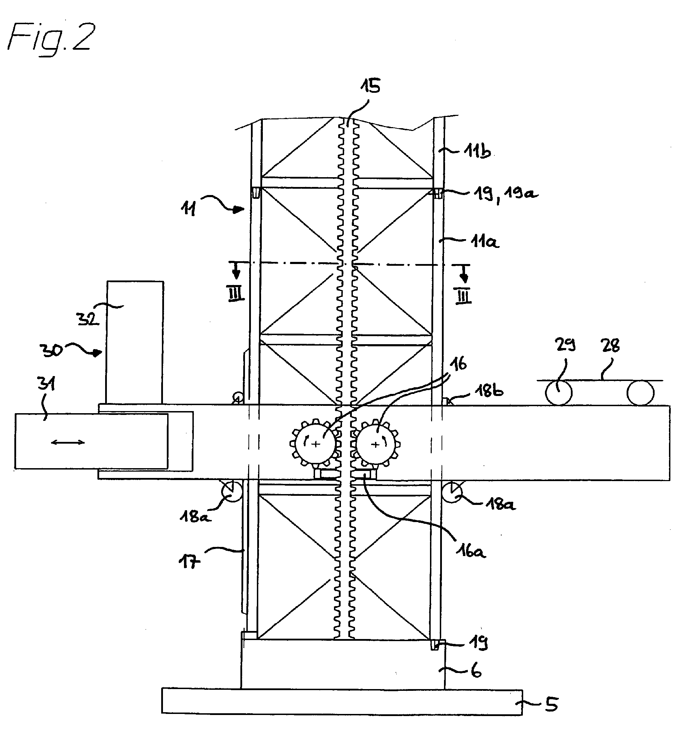

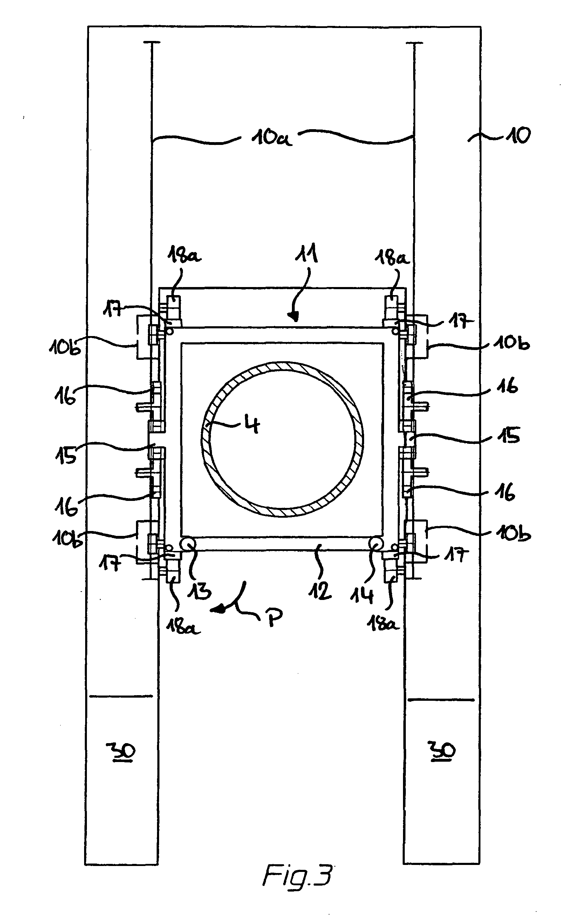

Wie insbesondere aus Fig. 2, wo das Bauwerk 4 (Fig. 1) aus Gründen der Übersichtlichkeit weggelassen worden ist, und Fig. 3 ersichtlich, umgreift der Hilfsmast 11 das Bauwerk im Wesentlichen U- oder auch im Wesentlichen V-förmig, wodurch die Möglichkeit gegeben ist, den Hilfsmast 11 um das zu errichtende Bauwerk bzw. um bereits errichtete Bauwerkmodule herum aufzubauen, aber dabei einen vorgegebenen Abstand zu dem Bauwerk einzuhalten. Um die Stabilität, insbesondere die Festigkeit und Steifigkeit des Hilfsmastes 11 zu erhöhen, ist vorzugsweise vorgesehen, dass der Hilfsmast 11 das Bauwerk nicht nur im Wesentlichen U- oder V-förmig umgreift, sondern die freien Enden der U- oder V-Struktur mittels Versteifungselementen 12 (Fig. 3) lösbar miteinander verbindbar sind, so dass das Bauwerk 4 allseitig von dem Hilfsmast 11 umschlossen ist. Die Versteifungselemente 12 können beispielsweise von etwa stangenförmigen Trägern gebildet sein, welche in einem Lager 13 an einem Ende der U-förmigen Struktur in Richtung des Pfeils P schwenkbar angelenkt und mittels Verschlusselementen 14 an dem anderen Ende der U-Struktur lösbar festlegbar sind. Der U-förmige Hilfsmast 11 bildet auf diese Weise eine geschlossene Rahmenstruktur und ist zudem bedarfsweise, z.B. anlässlich der Demontage des Hilfsmastes 11 nach Fertigstellung des Bauwerkes, zu öffnen. Selbstverständlich können die Versteifungselemente 12 auch andersartig, z.B. durch Verschrauben, Formschluss oder beliebige andere bekannte Fügeprozesse lösbar an den Enden der U-Struktur befestigbar sein. Wie ebenfalls insbesondere der Fig. 2 zu entnehmen ist, kann der Hilfsmast nach Art eines Stabwerks aufgebaut sein.

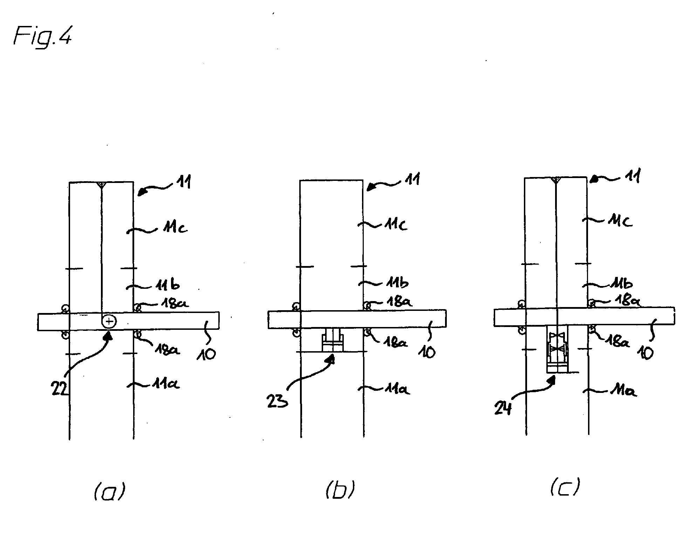

Wie wiederum insbesondere den Fig. 2 und 3 zu entnehmen ist, umfasst der Antrieb der Hubgondel 10 z.B. wenigstens eine an dem Hilfsmast 11 angeordnete Zahnstange 15 sowie wenigstens ein an der Hubgondel 10 angeordnetes, motorisch angetriebenes Zahnrad 16, welches in die Zahnstange 15 eingreift, wobei im vorliegenden Fall ein Paar von Zahnrädern 16 in die an entgegengesetzten Seiten der Zahnstange 15 angeordnete Zähne eingreift, was im Hinblick auf einen Kraftausgleich günstig ist, um insbesondere Abdrängkräften der Zahnräder 16 von der Zahnstange 15 fort entgegenzuwirken. Mittels eines solchen Antriebs sind eine kontinuierliche oder diskontinuierliche bzw. schrittweise Verlagerung der Hubgondel sowie ein Anhalten derselben auf einem beliebigen Höhenniveau möglich. Alternativ oder zusätzlich zu einem derartigen Zahnstangenantrieb können selbstverständlich auch andere Antriebe vorgesehen sein, wie beispielsweise Seilwinden 22 (Fig. 4a), Pressen 23 (Fig. 4b), Litzenheber 24 (Fig. 4c) oder dergleichen.

Darüber hinaus sind beim vorliegenden Ausführungsbeispiel an zumindest zwei entgegengesetzten Außenseiten des Hilfsmastes 11 Führungsflächen (wie in Fig. 2 rechts angedeutet) oder -schienen 17 (wie in Fig. 2 links sowie in Fig. 3 angedeutet) vorgesehen, welche durch Kontakt mit Führungsrädern 18a der Hubgondel 11 die Führungskräfte der Hubgondel 11 während ihrer Verlagerung entlang der Zahnstange 15 aufzunehmen vermögen. Alternativ oder zusätzlich kann auch ein Gleitkontakt der Hubgondel 10 an dem Hilfsmast 11 vorgesehen sein, wie es in Fig. 2 (rechts oben) mit dem Bezugszeichen 18b angedeutet ist.

Wie wiederum der Fig. 2 entnehmbar, ist der Hilfsmast 11 - wie auch das Bauwerk 4 selbst - ebenfalls modulartig aufgebaut, wobei die Länge eines Hilfsmastmoduls 11a, 11b zweckmäßig etwa der Länge eines Bauwerkmoduls 1, 2, 3 entspricht. Die Ausführung der Zahnstange 15 ist dabei derart gewählt, dass beim Übergang zweier errichteter Hilfsmastmodule 11a, 11b die Verzahnung der Module 11a, 11b exakt ineinander übergeht, so dass ein harmonischer Übergang gebildet ist und im Übergangsbereich kein Verschleiß oder gar eine Beschädigung der passierenden Zahnräder 16 der Hubgondel 10 verursacht wird. Von Bedeutung ist bei dem modularen Aufbau des Hilfsmastes 11 insbesondere, dass ein jeweiliges Hilfsmastmodul 11a, 11b derart mit einem jeweiligen Bauwerkmodul zu einem Gesamtmodul lösbar verbindbar ist, dass das Hilfsmastmodul 11a, 11b das Gewicht des Bauwerkmoduls sowie insbesondere auch durch die Hubgondel 10 bewirkte Quer-, Torsionskräfte und Biegemomente aufzunehmen vermag.

Das Gesamtmodul bildet folglich eine statische Einheit und macht es möglich, dass die Hilfsmastmodule 11a, 11b zugleich als "Transportbehälter" für die Bauwerkmodule dienen können und letztere bereits bei der Anlieferung, beispielsweise auf speziellen Lkws oder Schiffen, vor einer äußeren Beschädigung schützen. In einem solchen Gesamtmodul lassen sich die Bauwerkmodule 1, 2, 3 auch einfach lagern und aufrichten und nehmen in der Vertikalen eine standsichere Position ein. Darüber hinaus lassen sich die Bauwerkmodule der Gesamtmodule bereits in einer geeigneten Relativposition zu dem bereits errichteten Teil des Bauwerkes 4 auf der Hubgondel 10 anordnen, wenn sich letztere in ihrer unteren Position befindet, so dass nach Verlagern der Hubgondel 10 nach oben auf das Niveau der Montageposition keine Ausrichtung der Gesamtmodule mehr erforderlich ist.

Gemäß einer vorteilhaften Ausgestaltung der Erfindung ist vorgesehen, dass die einzelnen Hilfsmastmodule 11a, 11b bei ihrer Errichtung - d.h. gemeinsam mit den hieran lösbar festgelegten Bauwerkmodulen - an ihren einander zugewandten Enden z.B. mittels stirnseitig angeordneter Formschlusselemente 19, 19a ausgefluchtet werden, wobei die Formschlusselemente 19, 19a beispielsweise einerseits konische Zapfen 19 aufweisen können, welche und in hierzu komplementäre Aufnahmen 19a einführbar sind. Wie insbesondere aus Fig. 2, 5, 7 und 10 ersichtlich, weisen die Hilfsmastmodule 11a, 11b, 11c der Gesamtmodule folglich vorzugsweise stirnseitig angeordnete Formschlusselemente 19, 19a auf, um sie bei ihrer Errichtung an dem oberen, bereits errichteten Hilfsmastmodul 11a, 11b, 11c auszufluchten, wobei miteinander ausgefluchteten Formschlusselementen 19, 19a benachbarter Hilfsmastmodule 11a, 11b, 11c insbesondere ein Schnellverschluss zur Befestigung derselben aneinander zugeordnet sein kann. Ein zur Sicherung einer derartigen Verbindung vorgesehener Schnellverschluss kann beispielsweise in Form von nicht gezeigten Sicherungsbolzen ausgebildet sein, welche in fluchtende, sich quer, also im wesentlichen radial, sowohl in den Zapfen 19 als auch in den Aufnahmen 19a der Formschlusselemente erstreckende Bohrungen einführbar sind, so daß ein einfach und schnell handhabbarer Schnellverschluss gebildet ist, mittels dessen die Hilfsmastmodule aneinander befestigt werden können, um sodann auch die entsprechenden Bauwerkmodule 1, 2, 3 aneinander zu befestigen, z.B. zu verschrauben. Beim vorliegenden Ausführungsbeispiel sind an den unteren Enden der Hilfsmastmodule 11a, 11b, 11c Formschlusselemente in Form von konischen Zapfen 19 angeordnet, währen die hierzu komplementären Aufnahme 19a an den oberen Enden der Hilfsmastmodule 11a, 11b, 11c angeordnet sind. Ein weiterer Vorteil eines solchen Ausgestaltung besteht darin, dass die von den Hilfsmastmodulen 11a, 11b, 11c jeweils getragenen Bauwerkmodule 1, 2, 3 nach dem Festlegen der Hilfsmastmodule 11a, 11b, 11c aneinander automatisch in der korrekten Relativposition in Bezug auf das obere, bereits errichtete Bauwerkmodul angeordnet sind, so dass z.B. die üblicherweise in endständigen Flanschen angeordneten Lochmuster zum Verschrauben der Bauwerkmodule 1, 2, 3 miteinander fluchten und nicht mehr relativ zueinander justiert werden müssen. Selbstverständlich sind anstelle von Sicherungsbolzen eines Schnellverschlusses der vorgenannten Art auch andere Sicherungsmittel, z.B. Haken, denkbar, welche an einem von zwei benachbarten Hilfsmastmodulen 11a, 11b, 11c schwenkbar befestigt und an einem Zapfen des anderen Hilfsmastmoduls 11a, 11b, 11c in Eingriff bringbar sind.

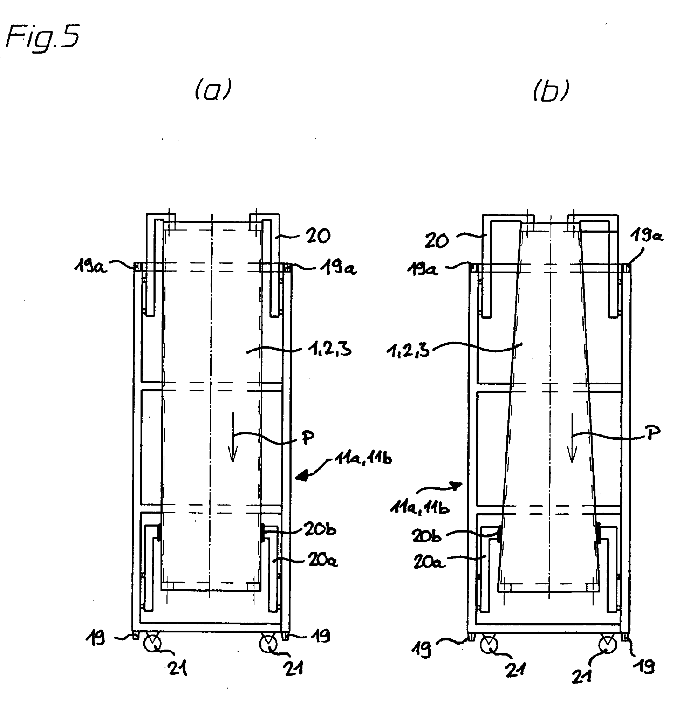

Eine besonders vorteilhafte Ausgestaltung solcher aus Bauwerkmodul 1, 2, 3 (Fig. 1) und Hilfsmastmodul 11a, 11b (Fig. 2) gebildeter Gesamtmodule sieht vor, dass das Bauwerkmodul 1, 2, 3 in Bezug auf das Hilfsmastmodul 11a, 11b höhenverlagerbar in dem Gesamtmodul angeordnet ist, wobei das Bauwerkmodul 1, 2, 3 - im Transportzustand - auf einem höheren Niveau als das Hilfsmastmodul 11a, 11b angeordnet und zumindest auf das Niveau des Hilfsmastmoduls 1, 2, 3 absenkbar ist. Ausführungsbeispiele solcher Gesamtmodule sind in Fig. 5 wiedergegeben, wobei sich die Module gemäß Fig. 5a und 5b nur dadurch unterscheiden, dass das Bauwerkmodul 1, 2, 3 gemäß Fig. 5a etwa kreiszylindrisch ist, während in Fig. 5b das Bauwerkmodul 1, 2, 3 entsprechend Fig. 1 konisch ausgestaltet ist. Die Erfindung macht es indes selbstverständlich möglich, die Form des Bauwerkmoduls praktisch beliebig zu wählen, ohne die Ausgestaltung der Vorrichtung zur Errichtung des Bauwerks - mit Ausnahme einer Anpassung der geometrischen Abmessungen der lösbaren Befestigung des Bauwerkmodule 1, 2, 3 an den Hilfsmastmodulen 11a, 11b - verändern zu müssen. Die Höhenverstellbarkeit des Bauwerkmoduls 1, 2, 3 in Bezug auf das Hilfsmastmodul 11a, 11b ist im vorliegenden Fall durch auf die Geometrie der jeweiligen Bauwerkmodule 1, 2, 3 abgestimmte Greifer 20 der Hilfsmastmodule 11a, 11b sichergestellt, welche an der Rahmenstruktur des Hilfsmastmoduls höhenverlagerbar, z.B. linear entlang der Rahmenstruktur mittels Rollen, Kolben-/Zylindereinheiten oder dergleichen verschieblich (Pfeil P), gelagert sind. Wie ebenfalls aus Fig. 5 ersichtlich, können die Greifer 20 beispielsweise für eine hängende Anordnung des Bauwerkmoduls 1, 2, 3 in dem Hilfsmastmodul 11a, 11b, 11c eines jeweiligen Gesamtmoduls sorgen, wobei sie beim vorliegenden Ausführungsbeispiel z.B. in ein zur Befestigung der Bauwerkmodule 1, 2, 3 aneinander vorgesehenes Lochmuster eines oberen, in Fig. 5 nicht näher wiedergegebenen Innenflansches des Bauwerkmoduls 1, 2, 3 eingreifen, welcher zugleich zur Befestigung der Bauwerkmodule 1, 2, 3 aneinander unter Bildung des zu errichtenden Bauwerkes dient. Im Bereich des unteren Endes können die Hilfsmastmodule 11a, 11b, 11c ferner mit seitlichen Führungselementen 20a versehen sein, welche zweckmäßig an ihrer dem Bauwerkmodul 1, 2, 3 zugewandten Seite mit einem nachgiebigen Material 20b, beispielsweise Gummi oder weicher Kunststoff, beschichtet sind, um das Bauwerkmodul 1, 2, 3 innerhalb des Gesamtmoduls in Position zu halten, ohne es im Falle eines Kontaktes mit den Führungselementen 20a zu beschädigen. Auf diese Weise ist es möglich, ein zu errichtendes Bauwerkmodul, nachdem es in seine Montageposition verbracht worden ist, auf das obere, bereits errichtete Bauwerkmodul abzusenken, nachdem die Hilfsmastmodule der jeweiligen Gesamtmodule aneinander befestigt worden sind. An der Unterseite der Hilfsmastmodule 11a, 11b können ferner Rollen oder Walzen 21 vorgesehen sein, um eine seitliche Verlagerung der Module zu erleichtern, welche schienengeführt sein kann. Selbstverständlich wäre grundsätzlich auch eine seitliche Verlagerung auf Gleitschienen möglich.

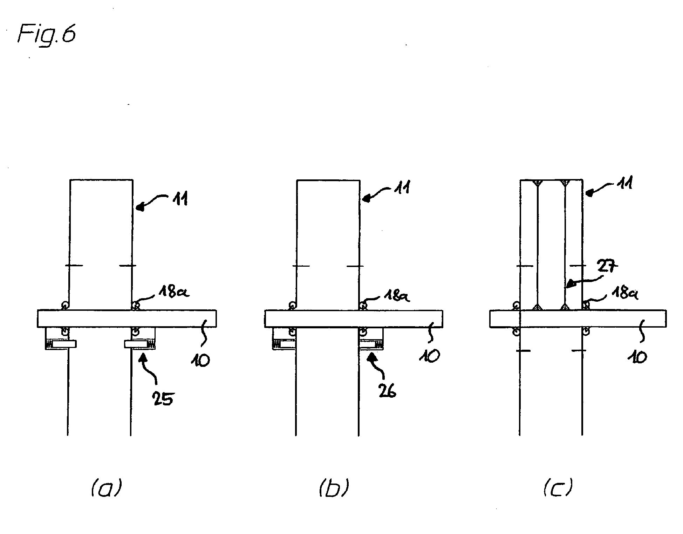

In weiterhin vorteilhafter Ausgestaltung kann vorgesehen sein, dass der Antrieb der Hubgondel 10 Blockierelemente aufweist, welche zum Festsetzen der Hubgondel 10 an dem Hilfsmast 11 ausgebildet sind. Die Blockierelemente dienen insbesondere als Sicherungselemente, indem sie die Hubgondel 10 in einer vorzugsweise praktisch beliebigen Position an dem Hilfsmast zu blockieren vermögen. So können die Blockierelemente im Falle des in Fig. 2 gezeigten Zahnstangenantriebs beispielsweise formschlüssig in die Zahnstange 15 eingreifen und z.B. mittels Federn in ihre Blockierstellung vorbelastet sein. Derartige Blockierelemente sind in Fig. 2 mit dem Bezugszeichen 16a angedeutet. Ein weiterer Vorteil solcher Blockierelemente besteht darin, dass dann, wenn die Hubgondel 10 mittels der Blockierelemente auf einem gewünschten Höhenniveau festgesetzt worden ist, der Antrieb - im Falle des Zahnstangenantriebs gemäß Fig. 2 die Zahnräder 16 - nicht mehr belastet wird und das Gewicht der Hubgondel 10 sowie hierauf transportierter Bauwerkmodule 1, 2, 3 von den Blockierelementen aufgenommen wird. In Fig. 6 sind weitere Ausführungsbeispiele möglicher Blockierelemente 25, 26, 27 gezeigt, welche sowohl zur Abstützung der Hubgondel 10 auf einem gewünschten Höhenniveau als auch als Sicherung der Hubgondel 10 im Versagensfall des Antriebs dienen können. Wie aus Fig. 6a ersichtlich, kann es sich bei den Blockierelementen 25 beispielsweise um in Richtung der Blockierstellung vorbelastete Abstützelemente, wie Bolzen, handeln, welche an der Hubgondel 10 und/oder an dem Hilfsmast 11 angeordnet sind und unter Formschluss in entsprechende Aufnahmestrukturen des Hilfsmastes 11 und/oder der Hubgondel 10 eingreifen (Fig. 6a), oder die Blockierelemente 26 sind in Form von in Richtung der Blockierstellung vorbelasteten, ähnlichen Abstützelementen, wie Bolzen, gebildet, welche wiederum an der Hubgondel 10 und/oder an dem Hilfsmast 11 angeordnet sind, aber lediglich durch Reibschluss an entsprechenden Strukturen des Hilfsmastes 11 und/oder der Hubgondel 10, wie beispielsweise einer Gleitfuge, festlegbar sind (Fig. 6b), wobei die Blockierelemente 26 ebenfalls vorzugsweise selbsthemmend sind. Fig. 6c zeigt ein weiteres Ausführungsbeispiel von Blockierelementen 27 in Form von Seilen, welche am oberen Ende des Hilfsmastes 11 festgelegt sind und die Hubgondel 10 in der jeweiligen Position festzuhalten vermögen.

Wie wiederum vornehmlich aus Fig. 2 ersichtlich, sieht eine insbesondere für die Errichtung einer Windkraftanlage vorgesehene, bevorzugte Ausführung vor, dass die Hubgondel 10 mit einer Verschiebeeinrichtung 28 ausgestattet ist, welche zwischen einer seitlichen Transportposition eines aus Bauwerk- 1, 2, 3 und Hilfsmastmodul 11a, 11b, 11c gebildeten Gesamtmoduls (in Fig. 2 nicht gezeigt) und einer demgegenüber zentraleren Montageposition des Gesamtmoduls im Wesentlichen parallel zur Ersteckungsebene der Hubgondel 10 verlagerbar ist. Die Verschiebeeinrichtung 28, welche insbesondere die Maschinengondel 7 (Fig. 1) der Windkraftanlage in ihre Montageposition zu verbringen vermag und/oder gegebenenfalls auch das jeweils zu errichtende Bauwerkmodul 1, 2, 3 anlässlich seiner Überführung auf das Niveau seiner Montageposition trägt (z.B. dann, wenn die Hilfsmastmodule 11a, 11b, 11c an ihrer Unterseite nicht mit Roll- oder Gleitmitteln ausgestattet sind), kann beispielsweise nach Art eines Schlittens ausgeführt sein, welcher auf Wälz- 29 oder auch Gleitlagern entlang der Erstreckungsebene der Hubgondel 10 geführt und z.B. hydraulisch, pneumatisch oder motorisch angetrieben ist. Zur Überführung der Gesamtmodule von ihrer in Bezug auf den Hilfsmast 11 seitlichen Transportposition auf der Hubgondel 10 in ihre Montageposition kann indes in vorteilhafter Ausgestaltung statt dessen vorgesehen sein, daß die Hubgondel 10 oberflächige Führungen 10a (Fig. 2), z.B. in Form von Schienen, besitzt, auf welchen die aus Hilfsmast- 11a, 11b, 11c und Bauwerkmodulen 1, 2, 3 gebildeten Gesamtmodule z.B. mittels Rollen 21 (Fig. 5), Gleitkontakt oder dergleichen entlang führbar sind. Wie weiterhin aus Fig. 3 ersichtlich, können diese Führungen 10a für die Hilfsmastmodule 11a, 11b, 11c der Gesamtmodule je nach Ausgestaltung der Führungen bzw. des Antriebs der Hubgondel 10 an dem Hilfsmast 11 bereichsweise unterbrochen sein, um stets eine ungehinderte Verlagerung der Hubgondel 10 entlang dem Hilfsmast 11 zu gewährleisten, wobei in diesem Fall in solche Lücken einsetzbare, separate Führungsstücke 10b vorgesehen sein können, die bei Stillstand der Hubgondel 10 auf dem jeweiligen Montageniveau unter Vervollständigung der Führungen 10a montiert werden können.

In weiterhin vorteilhafter Ausgestaltung kann in diesem Zusammenhang vorgesehen sein, dass die Hubgondel 10 mit einem Drehmomentenausgleichssystem 30 ausgestattet ist, welches zum Ausgleich des von dem Gewicht eines transportierten Gesamtmoduls (oder auch der Maschinengondel 7 einer Windenergieanlage) ausgeübten Drehmomentes in Abhängigkeit von dessen Position auf der Hubgondel 10 ausgebildet ist. Auf diese Weise ist es möglich, insbesondere bei der Überführung des Gesamtmoduls von seiner Transportposition auf der Hubgondel 10 in seine Montageposition (was - wie oben erwähnt - vorzugsweise mittels der Verschiebeeinrichtung 28 geschehen kann) das von dem Gesamtmodul auf die Hubgondel 10 ausgeübte Drehmoment zu kompensieren. Das Drehmomentenausgleichssystem 30 kann, wie aus Fig. 2 ersichtlich, z.B. wenigstens ein an der Hubgondel 10 geführtes Gegengewicht 31 umfassen, welches in Quer- bzw. Radialrichtung in Bezug auf den Hilfsmast 11 verlagerbar ist, wobei es z.B. ebenfalls auf Gleit- oder Wälzlagern geführt und hydraulisch, pneumatisch oder motorisch angetrieben sein kann. Alternativ oder zusätzlich kann das Drehmomentenausgleichssystem 30, wie ebenfalls aus Fig. 2 hervorgeht, beispielsweise ein an der Hubgondel 10 angeordnetes Gegengewicht 32 aufweisen, dessen Masse veränderbar ist. Das Gegengewicht 32 kann dabei z.B. von einem Tank, wie einem Wassertank, gebildet sein, welcher mittels eines Steuerventils (nicht gezeigt) bedarfsweise teilweise bzw. vollständig entleerbar ist, so dass beispielsweise beim Überführen der Verschiebeeinrichtung 28 mit einem Bauwerkelement 1, 2, 3 radial nach innen der Wassertank entsprechend entleert werden kann.

Die Hubgondel 10 selbst besitzt im Übrigen zweckmäßig eine etwa U-förmige Form (Fig. 3), wobei die freien Enden dieser U-Form insbesondere im Falle eines Drehmomentenausgleichssystems 30 der vorgenannten Art in Bezug auf den Hilfsmast 11 radial vorstehen, also über die Außenkontur des Hilfsmastes 11 hinausragen, um für einen hinreichenden Hebelarm der Gegengewichte 31 und/oder 32 zu sorgen.

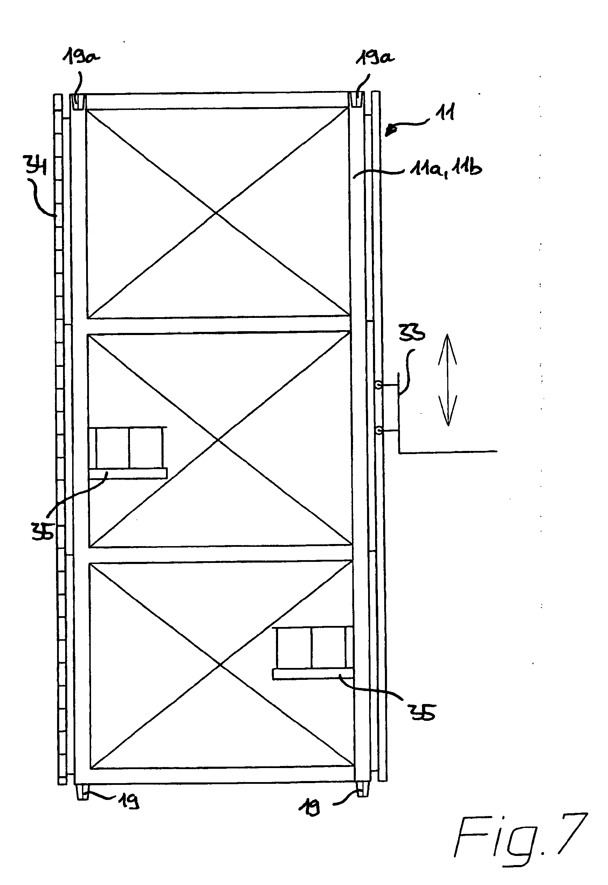

Wie der Fig. 7 zu entnehmen ist, kann der Hilfsmast 11 bzw. das jeweilige Hilfsmastmodul 11a, 11b selbstverständlich auch zur Anbringung weiterer Einrichtungen, z.B. wenigstens eines weiteren Hubmittels 33, wie eines Lasten- und/oder Personenaufzugs, welcher an dem Hilfsmast 11 geführt ist, einer begehbaren Treppe 34, begehbaren Plattformen 35 etc. dienen.

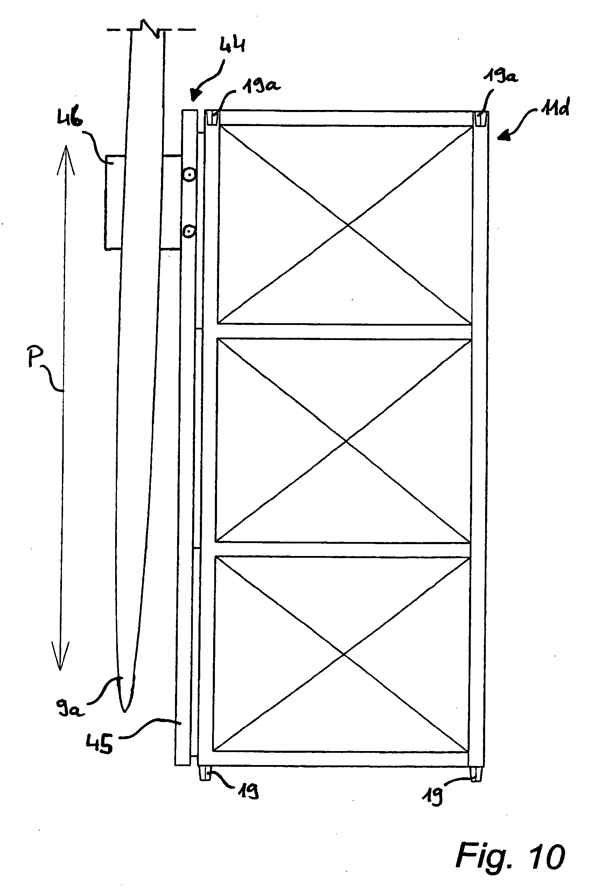

In Fig. 10 ist schließlich ein Hilfsmastmodul 11d wiedergegeben, welches entsprechend den Ausgestaltungen gemäß Fig. 5 ebenfalls ein Bauwerkmodul (nicht gezeigt), insbesondere das obere Bauwerkmodul, tragen kann und welches mit einer separaten Hubeinrichtung 44 ausgestattet ist, die zur Aufnahme eines Rotorblattes 9a der Windenergieanlage ausgebildet ist. Die Hubeinrichtung 44 umfasst hierbei einen entlang einer vertikalen Führung 45 an einer Außenseite des Hilfsmastmoduls 11d in Richtung des Pfeils P verlagerbaren Schlitten 46, an welchem das Rotorblatt 9a lösbar befestigt ist. Die Führung 45 ist dabei an derjenigen Seite des Hilfsmastmoduls 11d angeordnet, welche sich zwischen den freien Enden der U-förmigen Hubgondel 10 (vgl. Fig. 3) befindet. Wie weiter unten unter Bezugnahme auf das erfindungsgemäße Verfahren noch näher erläutert, ist auf diese Weise insbesondere eine einfache Montage des dritten Rotorblattes 9a der Windkraftanlage möglich, welche in der Regel Schwierigkeiten insbesondere in Bezug auf dessen Positionierung zum Festlegen an der Welle 8 der Maschinengondel 7 (vgl. Fig. 1) bereitet.

Die Montage des Bauwerkes 4 mittels der erfindungsgemäßen Vorrichtung kann wie folgt geschehen:

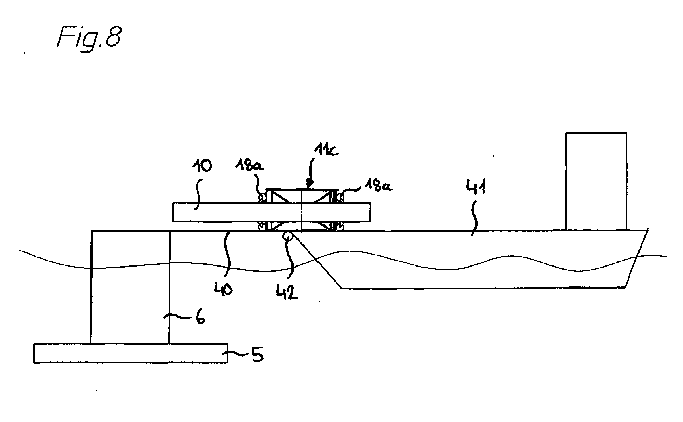

Wie in Fig. 8 skizziert, wird zunächst auf herkömmliche Weise das Fundament 5 des Bauwerks sowie gegebenenfalls die hierauf befindliche Gründungsstruktur 6 erstellt, was zu Lande oder, wie in Fig. 8 dargestellt, zu Wasser geschehen kann. Um sodann für eine einfache Anordnung des Hilfsmastes 11 mit der Hubgondel 10 zu sorgen, kann es günstig sein, wenn zunächst ein Hilfsmastelement 11c entsprechend den Hilfsmastelementen 11a, 11b, aber mit demgegenüber geringerer Bauhöhe, welche gerade hinreichend ist, um die Hubgondel 10 aufzunehmen, die Gründungsstruktur 6 des zu errichtenden Bauwerkes U-förmig umgreifend positioniert wird, was beispielsweise mittels einer Rampe 40 geschehen kann, welche an einem Transportfahrzeug - hier an einem Schiff 41 - um eine horizontale Achse 42 schwenkbar angelenkt ist. Sodann werden die freien U-Enden des Hilfsmastelemente 11c entsprechend der in Fig. 3 gezeigten Situation miteinander verbunden. Sodann werden die jeweils aus einem Bauwerk- 1, 2, 3 und einem Hilfsmastmodul 11a, 11b gebildeten Gesamtmodule (vgl. z.B. Fig. 5) nach und nach angeliefert, auf die Hubgondel 10 aufgesetzt, die Hubgondel 10 entlang bereits errichteter Hilfsmastmodule 11a, 11b nach oben auf das Niveau ihrer Montageposition und sodann mittels der Verschiebeeinrichtung 28 in ihre endgültige Montageposition auf dem jeweils oberen, bereits errichteten Bauwerkmodul verbracht und dort festgelegt. Während der endgültigen Befestigung der Bauwerkmodule 1, 2, 3, d.h. insbesondere während der Sicherung der bereits in Montageposition verbrachten Bauwerkmodule 1, 2, 3 mittels eines Sicherungsbolzen und/oder -haken umfassenden Schnellverschlusses der weiter oben erwähnten Art, kann die Hubgondel 10 bereits wieder in ihre untere Position verfahren werden, in welcher sie das nächste Bauwerkmodul aufnehmen kann.

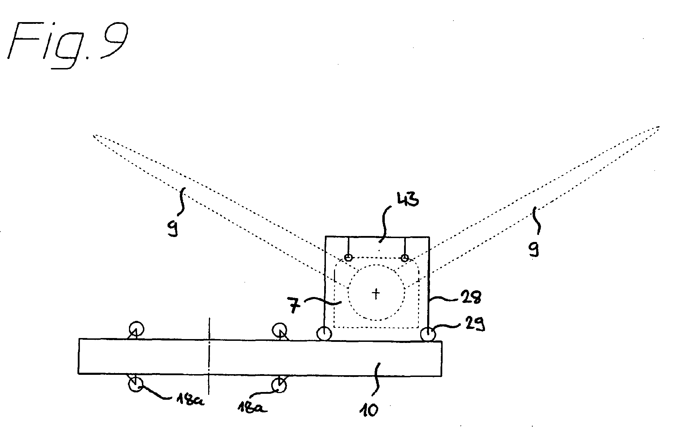

Wie aus Fig. 9 ersichtlich, kann im Falle einer zu errichtenden Windenergieanlage zuletzt die Maschinengondel 7 mittels der Hubgondel 10 auf ihr Montageniveau angehoben und dort entlang der Tragebene der Hubgondel 10, z.B. auf deren mit Rollen 29 ausgestatteten Schlitten 28, welcher in Fig. 9 ein Haltegestell 43 der Maschinengondel 7 trägt, in ihre Montageposition verbracht werden, wobei es beispielsweise möglich ist, dass zwei Rotorblätter 9 der Windenergieanlage an der Maschinengondel 7 vormontiert und die Maschinengondel 7 mit den beiden Rotorblättern 9 auf dem oberen Bauwerkmodul 3 (Fig. 1) montiert werden.

Wird als Hilfsmastmodul des oberen Gesamtmoduls ein Hilfsmastmodul 11d entsprechend der in Fig. 10 wiedergegebenen Ausgestaltung verwendet, so kann anschließend auf einfache Weise das dritte Rotorblatt 9a an der Welle der bereits montierten Maschinengondel 7 befestigt werden. Hierzu wird der das dritte Rotorblatt 9a tragende Schlitten 46 auf das gewünschte Montageniveau in Richtung des Pfeils P in Fig. 10 nach oben verfahren, das dritte Rotorblatt 9b an der Welle 8 der Maschinengondel 7 montiert und von dem Schlitten 46 gelöst. Anläßlich der vorangehenden Montage der Maschinengondel 7 selbst ist es ferner möglich, das bereits an der Hubeinrichtung 44 des oberen Hilfsmastmoduls 11d festgelegte Rotorblatt 9a in Richtung des Pfeils P in Fig. 10 zumindest so weit nach unten zu verfahren, dass das in Fig. 10 abgebrochen dargestellte, befestigungsseitige Ende des Rotorblattes 9a nicht mehr nennenswert über die Oberseite des Hilfsmastmoduls 11d nach oben vorragt, um die Montage der Maschinengondel 7 nicht zu beeinträchtigen.

Mittels der Erfindung ist es selbstverständlich ebenso möglich, die Windenergieanlage wieder ganz oder teilweise (z.B. zum Austausch der Maschinengondel und/oder einzelner Rotorblätter) zu demontieren. Desgleichen kann der Hilfsmast 11 nach Errichtung des Bauwerkes selbstverständlich wieder entfernt werden, indem die einzelnen Hilfsmastmodule 11a, 11b von oben nach unten demontiert und mittels der Hubgondel 10 entlang noch bestehender Hilfsmastmodule 11a, 11b nach unten verlagert und abtransportiert werden.

Schließlich ist die Erfindung nicht auf die Anwendung zur Errichtung von Bauwerken in Form von Windenergieanlagen beschränkt, sondern kann selbstverständlich zur Errichtung beliebiger Bauwerke dienen, welche aus mehreren übereinander angeordneten Modulen gebildet sind.

## Patentansprüche

1. Verfahren zur Montage eines aus mehreren übereinander angeordneten Modulen (1, 2, 3) gebildeten Bauwerks (4), wie einer Windenergieanlage oder dergleichen, wobei zunächst ein erstes Modul (1) des Bauwerks (4) aufgestellt und sodann wenigstens ein weiteres Bauwerkmodul (2, 3) auf das erste Bauwerkmodul (1) bzw. auf bereits errichtete Bauwerkmodule (1, 2, 3) aufgesetzt wird, indem zumindest das wenigstens eine weitere Bauwerkmodul (2, 3) mittels einer Hubgondel (10) derart auf das Niveau seiner Montageposition nach oben verfahren wird, dass ein Kontakt der Hubgondel (10) mit dem/den bereits errichteten Bauwerkmodul(en) (1, 2, 3) zumindest während der Verlagerung der Hubgondel (10) vermieden wird, **dadurch gekennzeichnet, dass**
- parallel zu dem zu errichtenden Bauwerk (4) und seitlich desselben ein ebenfalls modulartig aufgebauter selbsttragender Hilfsmast (11) errichtet wird, wobei die Länge eines selbsttragenden Hilfsmastmoduls (11a, 11b, 11d) etwa der Länge eines Bauwerkmoduls (1, 2, 3) entspricht; wobei
- ein jeweiliges selbsttragendes Hilfsmastmodul (11a, 11b, 11d) zuvor derart mit einem jeweiligen Bauwerkmodul (1, 2, 3) zu einem Gesamtmodul lösbar verbunden wird, dass das selbsttragende Hilfsmastmodul (11a, 11b, 11d)eines solchen Gesamtmoduls das Gewicht dessen Bauwerkmoduls (1, 2, 3) aufzunehmen vermag; und wobei
- die Gesamtmodule aus jeweils einem selbsttragenden Hilfsmastmodul (11a, 11b, 11d) und einem Bauwerkmodul (1, 2, 3) mittels der Hubgondel (10) entlang dem selbsttragenden Hilfsmast (11) bereits errichteter Bauwerkmodule (1, 2, 3) auf das Niveau der Montageposition nach oben verlagert werden, wobei beim Verlagern der Hubgondel (10) entlang dem selbsttragenden Hilfsmast (11) sowohl ein Kontakt der Hubgondel (10) mit dem Bauwerk (4) als auch eine Einleitung von durch die Hubgondel (10) und hieran angreifendem Wind bewirkten Normal-, Quer-, Torsionskräften und Biegemomenten in das Bauwerk (4) und somit jegliche mechanische Beschädigungen des Bauwerks (4) vermieden werden.

2. Verfahren nach Anspruch 1, **dadurch gekennzeichnet, dass** das Bauwerkmodul (1, 2, 3) in Bezug auf das Hilfsmastmodul (11a, 11b, 11d) höhenverlagerbar in dem Gesamtmodul angeordnet wird, wobei das Bauwerkmodul (1, 2, 3) auf einem höheren Niveau als das Hilfsmastmodul (11a, 11b, 11d) angeordnet wird und zumindest auf das Niveau des Hilfsmastmoduls (11a, 11b, 11d) abgesenkt werden kann.

3. Verfahren nach Anspruch 1 oder 2, **dadurch gekennzeichnet, dass** das Gesamtmodul, nachdem es auf das Niveau seiner Montageposition verbracht worden ist, auf der Hubgondel (10) abgestützt und im Wesentlichen parallel zur Erstreckungsebene derselben in die Montageposition dessen Bauwerkmoduls (1, 2, 3) oberhalb des oberen, bereits errichteten Bauwerkmoduls (1, 2, 3) verschoben wird.

4. Verfahren nach Anspruch 3, **dadurch gekennzeichnet, dass** während der seitlichen Verlagerung des Gesamtmoduls auf der Hubgondel (10) ein Drehmomentenausgleich an der Hubgondel (10) vorgenommen wird.

5. Verfahren nach Anspruch 4, **dadurch gekennzeichnet, dass** der Drehmomentenausgleich durch Verlagern und/oder durch Verändern der Masse eines Gegengewichtes (31, 32) der Hubgondel (10) vorgenommen wird.

6. Verfahren nach einem der Ansprüche 1 bis 5, **dadurch gekennzeichnet, dass** die Gesamtmodule bei der Errichtung mittels stirnseitig an deren Hilfsmastmodulen (11a, 11b, 11c) angeordneter Formschlusselemente (19, 19a) ausgefluchtet werden, wobei miteinander ausgefluchtete Formschlusselemente (19, 19a) benachbarter Hilfsmastmodule (11a, 11b, 11c) insbesondere mittels eines Schnellverschlusses aneinander befestigt werden.

7. Verfahren nach einem der Ansprüche 1 bis 6, **dadurch gekennzeichnet, dass** der Hilfsmast (11) bzw. das Hilfsmastmodul (11a, 11b, 11d) das Bauwerk (4) bzw. das Bauwerkmodul (1, 2, 3) zumindest teilweise, insbesondere im Wesentlichen U- oder V-förmig, umgreifend angeordnet wird.

8. Verfahren nach Anspruch 7, **dadurch gekennzeichnet, dass** der Hilfsmast (11) bzw. das Hilfsmastmodul (11a, 11b, 11d) das Bauwerk (4) bzw. das Bauwerkmodul (1, 2, 3) zunächst im Wesentlichen U- oder V-förmig umgreifend angeordnet wird, wonach die freien Enden der U- oder V-Struktur mittels Versteifungselementen (12) lösbar miteinander verbunden werden, so dass das Bauwerk (4) bzw. das Bauwerkmodul (1, 2, 3) allseitig von dem Hilfsmast (11) bzw. dem Hilfsmastmodul (11a, 11b, 11d) umschlossen wird.

9. Verfahren nach einem der Ansprüche 1 bis 8, **dadurch gekennzeichnet, dass** mittels der entlang dem Hilfsmast (11) verlagerbaren Hubgondel (10) auf das obere Bauwerkmodul (3) die Maschinengondel (7) einer Windenergieanlage aufgesetzt wird, und dass wenigstens ein Rotorblatt (9a) der Windenergieanlage an einer separaten Hubeinrichtung (44) eines Gesamt- oder Hilfsmastmoduls (11d) angeordnet und das Gesamt- oder Hilfsmastmodul (11d) gemeinsam mit dem Rotorblatt (9a) mittels der Hubgondel (10) in seine Montageposition verbracht wird, wonach das Rotorblatt (9a) mittels der Hubeinrichtung (44) in Bezug auf die Maschinengondel (7) positioniert und an deren Welle (8) befestigt wird.

10. Vorrichtung zur Montage eines aus mehreren übereinander angeordneten Modulen (1, 2, 3) gebildeten Bauwerks (4), wie einer Windenergieanlage oder dergleichen, insbesondere zur Durchführung eines Verfahrens nach einem der vorangehenden Ansprüche, mit einem Hilfsmast (11) und einer hieran geführten Hubgondel (10), welche zwischen einer ersten Position, in welcher sie ein zu montierendes Bauwerkmodul (1, 2, 3) aufzunehmen vermag, und einer zweiten Position auf dem Niveau der Montageposition des zu montierenden Bauwerkmoduls (1, 2, 3) auf einem bereits errichteten Bauwerkmodul (1, 2, 3) verlagerbar ist, wobei die Hubgondel (10) derart geführt ist, dass ein Kontakt der Hubgondel (10) mit dem/den bereits errichteten Bauwerkmodul(en) (1, 2, 3) zumindest während der Verlagerung der Hubgondel (10) entlang dem Hilfsmast (11) vermieden wird, **dadurch gekennzeichnet, dass**
- der Hilfsmast (11) selbsttragend und modulartig aufgebaut ist und parallel zu dem zu errichtenden Bauwerk (4) und seitlich von diesem anordbar ist, wobei die Länge eines selbsttragenden Hilfsmastmoduls (11a, 11b, 11d) etwa der Länge eines Bauwerkmoduls (1, 2, 3) entspricht; wobei
- ein jeweiliges selbsttragendes Hilfsmastmodul (11a, 11b, 11d) derart mit einem jeweiligen Bauwerkmodul (1, 2, 3) zu einem Gesamtmodul lösbar verbindbar ist, dass das selbsttragende Hilfsmastmodul (11a, 11b, 11d)eines solchen Gesamtmoduls das Gewicht dessen Bauwerkmoduls (1, 2, 3) aufzunehmen vermag; und wobei
- die Hubgondel (10) derart an dem selbsttragenden Hilfsmast (11) des wenigstens einen, bereits errichteten Bauwerkmoduls (1, 2, 3) geführt ist, dass beim Verlagern der Hubgondel (10) entlang dem selbsttragenden Hilfsmast (11) sowohl ein Kontakt der Hubgondel (10) mit dem Bauwerk (4) als auch eine Einleitung von durch die Hubgondel (10) und hieran angreifendem Wind bewirkten Normal-, Quer-, Torsionskräften und Biegemomenten in das Bauwerk (4) und somit jegliche mechanische Beschädigungen des Bauwerks (4) vermieden werden, um die aus jeweils einem selbsttragenden Hilfsmastmodul (11a, 11b, 11c) und einem Bauwerkmodul (1, 2, 3) gebildeten Gesamtmodule auf das Niveau der Montageposition nach oben zu verlagern,
wobei das Hilfsmastmodul eine Höhenverstellvorrichtung zur Höhenverlagerung eines jeweiligen Bauwerkmoduls (1, 2, 3) in Bezug auf dessen Hilfsmastmodul (11a, 11b, 11d) aufweist, wobei das Bauwerkmodul (1, 2, 3) auf einem höheren Niveau als das Hilfsmastmodul (11a, 11b, 11d) anordbar und zumindest auf das Niveau des Hilfsmastmoduls (11a, 11b, 11d) absenkbar ist.

11. Vorrichtung nach Anspruch 10, **dadurch gekennzeichnet, dass** die Hubgondel (10) mit einer Verschiebeeinrichtung (28) ausgestattet ist, welche zwischen einer seitlichen Transportposition eines Gesamtmoduls und einer demgegenüber zentraleren Montageposition dessen Bauwerkmoduls (1, 2, 3) im Wesentlichen parallel zur Erstreckungsebene der Hubgondel (10) verlagerbar ist.

12. Vorrichtung nach einem der Anspruch 10 oder 11, **dadurch gekennzeichnet, dass** die Hubgondel (10) mit einem Drehmomentenausgleichssystem (30) ausgestattet ist, welches zum Ausgleich des von dem Gewicht eines transportierten Gesamtmoduls ausgeübten Drehmomentes in Abhängigkeit von dessen Position auf der Hubgondel (10) ausgebildet ist, wobei das Drehmomentenausgleichssystem (30) insbesondere wenigstens ein an der Hubgondel (10) angeordnetes Gegengewicht (31, 32) umfasst, welches verlagerbar an der Hubgondel (10) geführt und/oder dessen Masse veränderbar ist.

13. Vorrichtung nach einem der Ansprüche 10 bis 12, **dadurch gekennzeichnet, dass** die Hilfsmastmodule (11a, 11b, 11c) der Gesamtmodule stirnseitig angeordnete Formschlusselemente (19, 19a) aufweisen, um sie bei ihrer Errichtung an dem oberen, bereits errichteten Hilfsmastmodul (11a, 11b, 11c) auszufluchten, wobei miteinander ausgefluchteten Formschlusselementen (19, 19a) benachbarter Hilfsmastmodule (11a, 11b, 11c) insbesondere ein Schnellverschluss zur Befestigung derselben aneinander zugeordnet ist.

14. Vorrichtung nach einem der Ansprüche 10 bis 13, **dadurch gekennzeichnet, dass** der Hilfsmast (11) bzw. das Hilfsmastmodul (11a, 11b, 11d) das Bauwerk (4) bzw. das Bauwerkmodul (1, 2, 3) zumindest teilweise, insbesondere im Wesentlichen U- oder V-förmig, umgreift.

15. Vorrichtung nach Anspruch 14, **dadurch gekennzeichnet, dass** der Hilfsmast (11) bzw. das Hilfsmastmodul (11a, 11b, 11d) das Bauwerk (4) bzw. das Bauwerkmodul (1, 2, 3) im Wesentlichen U- oder V-förmig umgreift, wobei die freien Enden der U- oder V-Struktur mittels Versteifungselementen (12) lösbar miteinander verbindbar sind, so dass das Bauwerk (4) bzw. das Bauwerkmodul (1, 2, 3) allseitig von dem Hilfsmast (11) bzw. dem Hilfsmastmodul (11a, 11b, 11d) umschlossen ist.

16. Vorrichtung nach einem der 10 bis 15, **dadurch gekennzeichnet, dass** der Antrieb der Hubgondel (10) wenigstens eine an den Hilfsmastmodulen (11a, 11b, 11c) des Hilfsmastes (11) angeordnete Zahnstange (15) sowie wenigstens ein an der Hubgondel (10) angeordnetes Zahnrad (16) umfasst, welches in die Zahnstange (15) eingreift.

17. Vorrichtung nach einem der Ansprüche 10 bis 16, **dadurch gekennzeichnet, dass** wenigstens ein Gesamt- oder Hilfsmastmodul (11d) mit einer separaten Hubeinrichtung (44) ausgestattet ist, welche zur Aufnahme wenigstens eines Rotorblattes (9a) einer Windenergieanlage ausgebildet ist.

## Claims

1. Method for assembling a structure (4) that is formed from several modules (1, 2, 3) that are disposed on top of each other, such as a wind power plant or the like, wherein a first module (1) of the structure (4) is initially erected, and at least one further structural module (2, 3) is subsequently disposed onto the first structural module (1) or the previously erected structural modules (1, 2, 3) by moving at least the at least one further structural module (2, 3) by means of a lifting gondola (10) in an upward direction to the level of its assembly position such that contact between the lifting gondola (10) and the previously erected structural module(s) (1, 2, 3) is prevented at least during movement of the lifting gondola (10), **characterized in that**
- a self-supporting auxiliary mast (11) that also has a modular construction is erected parallel to and laterally of the structure (4) to be erected, wherein the length of a self-supporting auxiliary mast module (11a, 11b, 11d) approximately corresponds to the length of a structural module (1, 2, 3); wherein
- a respective self-supporting auxiliary mast module (11a, 11b, 11d) is previously detachably connected to a respective structural module (1, 2, 3) to form an overall module, such that the self-supporting auxiliary mast module (11a, 11b, 11d) of said overall module can accept the weight of its structural module (1, 2, 3); and wherein
- the overall modules that are each formed from one self-supporting auxiliary mast module (11a, 11b, 11d) and one structural module (1, 2, 3) are moved by means of the lifting gondola (10) in an upward direction along the auxiliary mast (11) of previously erected structural modules (1, 2, 3) to the level of the assembly position, wherein, when the lifting gondola (10) is moved along the self-supporting auxiliary mast (11), contact between the lifting gondola (10) and the structure (4) is prevented as well as introduction of normal, transverse and twisting forces, and also of bending moments into the structure (4), which are generated by the lifting gondola (10) and the wind acting thereon, thereby preventing any mechanical damage to the structure (4).

2. Method according to claim 1, **characterized in that** the structural module (1, 2, 3) is disposed in the overall module such that its height can be adjusted with respect to the auxiliary mast module (11a, 11b, 11d), wherein the structural module (1, 2, 3) is disposed at a higher level than the auxiliary mast module (11a, 11b, 11d) and can be lowered at least to the level of the auxiliary mast module (11a, 11b, 11d).

3. Method according to claim 1 or 2, **characterized in that**, after moving the overall module to the level of its assembly position, the overall module is supported on the lifting gondola (10) and is displaced substantially parallel to the plane of extension thereof to the assembly position of its structural module (1, 2, 3) above the upper previously erected structural module (1, 2, 3).

4. Method according to claim 3, **characterized in that** the torque of the lifting gondola (10) is compensated for during lateral displacement of the overall module on the lifting gondola (10).

5. Method according to claim 4, **characterized in that** the torque is compensated for by displacing and/or changing the weight of a counterweight (31, 32) of the lifting gondola (10).

6. Method according to any one of the claims 1 through 5, **characterized in that** the overall modules are aligned during erection by means of interlocking elements (19, 19a) that are disposed at the front ends of their auxiliary mast modules (11a, 11b, 11c), wherein mutually aligned interlocking elements (19, 19a) of neighboring auxiliary mast modules (11a, 11c, 11c) are mounted to each other, in particular, by means of a quick release fastener.

7. Method according to any one of the claims 1 through 6, **characterized in that** the auxiliary mast (11) or the auxiliary mast module (11a, 11b, 11d) is disposed such that it surrounds the structure (4) or the structural module (1, 2, 3) at least partially, in particular substantially in a U-shape or V-shape.

8. Method according to claim 7, **characterized in that** the auxiliary mast (11) or the auxiliary mast module (11a, 11b, 11d) is initially disposed to surround the structure (4) or the structural module (1, 2, 3) substantially in a U-shape or V-shape, whereupon the free ends of the U- or V-structure are detachably connected to each other by means of reinforcing elements (12) such that the structure (4) or the structural module (1, 2, 3) is surrounded on all sides by the auxiliary mast (11) or the auxiliary mast module (11a, 11b, 11d).

9. Method according to any one of the claims 1 through 8, **characterized in that** the machine gondola (7) of a wind power plant is disposed onto the upper structural module (3) by means of the lifting gondola (10) that can be moved along the auxiliary mast (11), and that at least one rotor blade (9a) of the wind power plant is disposed on a separate lifting means (44) of an overall or auxiliary mast module (11d), and the overall or auxiliary mast module (11d) is moved together with the rotor blade (9a) into its assembly position by means of the lifting gondola (10), whereupon the rotor blade (9a) is positioned with respect to the machine gondola (7) by means of the lifting means (44), and fixed to its shaft (8).

10. Device for assembling a structure (4) that is formed from several modules (1, 2, 3) that are disposed on top of each other, such as a wind power plant or the like, in particular, for performing a method according to any one of the preceding claims, comprising an auxiliary mast (11) and a lifting gondola (10) being guided thereon that can be moved on a previously erected structural module (1, 2, 3) between a first position in which it can receive a structural module (1, 2, 3) to be mounted, and a second position at the level of the assembly position of the structural module (1, 2, 3) to be mounted, wherein the lifting gondola (10) is guided in such a fashion that contact between the lifting gondola (10) and the previously erected structural module(s) (1, 2, 3) is prevented at least during movement of the lifting gondola (10) along the auxiliary mast (11), **characterized in that**
- the auxiliary mast (11) is self-supporting and has a modular construction and can be erected parallel to and laterally of the structure (4) to be erected, wherein the length of a self-supporting auxiliary mast module (11a, 11b, 11d) approximately corresponds to the length of a structural module (1, 2, 3); wherein
- a respective self-supporting auxiliary mast module (11a, 11b, 11d) is detachably connected to a respective structural module (1, 2, 3) to form an overall module, such that the self-supporting auxiliary mast module (11a, 11b, 11d) of said overall module can accept the weight of its structural module (1, 2, 3); and wherein
- the lifting gondola (10) is guided on the self-supporting auxiliary mast (11) of the at least one previously erected structural module (1, 2, 3) in such a manner that, when the lifting gondola (10) is moved along the self-supporting auxiliary mast (11), contact between the lifting gondola (10) and the structure (4) is prevented as well as introduction of normal, transverse and twisting forces, and also of bending moments into the structure (4), which are generated by the lifting gondola (10) and the wind acting thereon, thereby preventing any mechanical damage to the structure (4), in order to move the overall modules that are each formed from one self-supporting auxiliary mast module (11a, 11b, 11d) and one structural module (1, 2, 3) in an upward direction to the level of the assembly position,
wherein the auxiliary mast module comprises a height adjustment means for adjusting the height of a respective structural module (1, 2, 3) with respect to its auxiliary mast module (11a, 11b, 11d), wherein the structural module (1, 2, 3) is disposable at a higher level than the auxiliary mast module (11a, 11b, 11d) and can be lowered at least to the level of the auxiliary mast module (11a, 11b, 11d).

11. Device according to claim 10, **characterized in that** the lifting gondola (10) has a shifting means (28) which can be moved between a lateral transport position of an overall module and a more central assembly position of its structural module (1, 2, 3), substantially parallel to the plane of extension of the lifting gondola (10).

12. Device according to claim 10 or 11, **characterized in that** the lifting gondola (10) has a torque compensation system (30) that is designed to compensate for the torque exerted by the weight of a transported overall module in dependence on its position on the lifting gondola (10), wherein the torque compensation system (30) comprises, in particular, at least one counterweight (31, 32) that is disposed on the lifting gondola (10), is displaceably guided on the lifting gondola (10) and/or the weight of which can be changed.

13. Device according to any one of the claims 10 through 12, **characterized in that** the auxiliary mast modules (11a, 11b, 11d) of the overall modules have interlocking elements (19, 19a) that are disposed at the front ends, in order to align them with the upper previously erected auxiliary mast module (11a, 11b, 11d) during erection, wherein mutually aligned interlocking elements (19, 19a) of neighboring auxiliary mast modules (11a, 11b, 11c) are associated, in particular, with a quick release fastener for fixing them to each other.

14. Device according to any one of the claims 10 through 13, **characterized in that** the auxiliary mast (11) or the auxiliary mast module (11a, 11b, 11d) surrounds the structure (4) or the structural module (1, 2, 3) at least partially, in particular, substantially in a U-shape or V-shape.

15. Device according to claim 14, **characterized in that** the auxiliary mast (11) or the auxiliary mast module (11a, 11b, 11d) surrounds the structure (4) or the structural module (1, 2, 3) substantially in a U-shape or V-shape, wherein the free ends of the U- or V-shaped structure can be detachably connected to each other by means of reinforcing elements (12), such that the structure (4) or the structural module (1, 2, 3) is surrounded on all sides by the auxiliary mast (11) or the auxiliary mast module (11a, 11b, 11d).

16. Device according to any one of the claims 10 through 15, **characterized in that** the drive of the lifting gondola (10) comprises at least one rack (15) that is disposed on the auxiliary mast modules (11a, 11b, 11d) of the auxiliary mast (11) and at least one toothed wheel (16) that is disposed on the lifting gondola (10) and engages in the rack (15).

17. Device according to any one of the claims 10 through 16, **characterized in that** at least one overall or auxiliary mast module (11d) has a separate lifting means (44) which is designed to receive at least one rotor blade (9a) of a wind power plant.

## Revendications

1. Procédé de montage d'une structure (4) formée de plusieurs modules superposés (1, 2, 3), comme une éolienne ou analogue, dans lequel on dresse d'abord un premier module (1) de la structure (4), on pose ensuite au moins un autre module de structure (2, 3) sur le premier module de structure (1) ou sur des modules de structure (1, 2, 3) déjà érigés, en déplaçant vers le haut au moins ledit au moins un autre module de structure (2, 3) au moyen d'une nacelle de levage (10) au niveau de sa position de montage, de telle manière qu'un contact de la nacelle de levage (10) avec le ou les module(s) de structure (1, 2, 3) déjà érigé(s) soit évité au moins pendant le déplacement de la nacelle de levage (10), **caractérisé en ce que**
- parallèlement à la structure à ériger (4) et à côté de celle-ci, on érige un mât auxiliaire autoportant (11), également à structure modulaire, dans lequel la longueur d'un module de mât auxiliaire autoportant (11a, 11b, 11d) correspond sensiblement à la longueur d'un module de structure (1, 2, 3), dans lequel
- on relie un module de mât auxiliaire autoportant respectif (11a, 11b, 11d) au préalable à un module respectif de structure (1, 2, 3) de façon séparable en un module global, de telle manière que le module de mât auxiliaire autoportant (11a, 11b, 11d) d'un tel module global puisse supporter le poids de son module de structure (1,2, 3); et dans lequel
- on déplace vers le haut les modules globaux composés respectivement d'un module de mât auxiliaire autoportant (11a, 11b, 11d) et d'un module de structure (1, 2, 3) au moyen de la nacelle de levage (10) le long du mât auxiliaire autoportant (11) de modules de structure déjà érigés (1, 2, 3) au niveau de la position de montage, dans lequel, lors du déplacement de la nacelle de montage (10) le long du mât auxiliaire autoportant (11), on évite aussi bien un contact de la nacelle de levage (10) avec la structure (4) qu'une introduction de forces normales, transversales et de torsion et de moments de flexion provoqués par la nacelle de levage (10) et le vent agissant sur celle-ci dans la structure (4) et ainsi des dommages mécaniques éventuels à la structure (4).

2. Procédé selon la revendication 1, **caractérisé en ce que** l'on dispose le module de structure (1, 2, 3) dans le module global de façon déplaçable en hauteur par rapport au module de mât auxiliaire (11a, 11b, 11d), dans lequel on dispose le module de structure (1, 2, 3) à un niveau plus élevé que le module de mât auxiliaire (11a, 11b, 11d) et on peut l'abaisser au moins au niveau du module de mât auxiliaire (11a, 11b, 11d).

3. Procédé selon la revendication 1 ou 2, **caractérisé en ce que** l'on appuie le module global, après qu'il ait été amené au niveau de sa position de montage, sur la nacelle de levage (10) et on le déplace essentiellement parallèlement au plan d'extension de celle-ci dans la position de montage de son module de structure (1, 2, 3) au-dessus du module de structure (1, 2, 3) supérieur déjà érigé.

4. Procédé selon la revendication 3, **caractérisé en ce que** l'on opère un équilibrage des moments de flexion sur la nacelle de levage (10) pendant le déplacement latéral du module global sur la nacelle de levage (10).

5. Procédé selon la revendication 4, **caractérisé en ce que** l'on opère l'équilibrage des moments de flexion par déplacement et/ou par modification de la masse d'un contrepoids (31, 32) de la nacelle de levage (10).

6. Procédé selon l'une quelconque des revendications 1 à 5, **caractérisé en ce que** l'on aligne les modules globaux lors de l'érection au moyen d'éléments d'emboîtement (19, 19a) disposés frontalement sur leurs modules de mât auxiliaire (11a, 11b, 11c)*,* dans lequel on fixe l'un à l'autre des éléments d'emboîtement (19, 19a) alignés entre eux de modules de mât auxiliaire voisins (11a, 11b, 11c), en particulier au moyen d'un raccord rapide.

7. Procédé selon l'une quelconque des revendications 1 à 6, **caractérisé en ce que** l'on dispose le mât auxiliaire (11) ou le module de mât auxiliaire (11a, 11b, 11d) de façon à entourer au moins partiellement, en particulier essentiellement en forme de U ou en forme de V, la structure (4) ou le module de structure (1, 2, 3).

8. Procédé selon la revendication 7, **caractérisé en ce que** l'on dispose le mât auxiliaire (11) ou le module de mât auxiliaire (11a, 11b, 11d) de façon à entourer d'abord essentiellement en forme de U ou en forme de V la structure (4) ou le module de structure (1, 2, 3), puis on relie de façon séparable l'une à l'autre les extrémités libres de la structure en U ou en V au moyen d'éléments de renforcement (12), de telle manière que la structure (4) ou le module de structure (1, 2, 3) soit entouré(e) de tous les côtés par le mât auxiliaire (11) ou le module de mât auxiliaire (11a, 11b, 11d).

9. Procédé selon l'une quelconque des revendications 1 à 8, **caractérisé en ce que** l'on dépose la nacelle motrice (7) d'une éolienne sur le module de structure supérieur (3) au moyen de la nacelle de levage (10) déplaçable le long du mât auxiliaire (11), et **en ce que** l'on dispose au moins une pale de rotor (9a) de l'éolienne sur un dispositif de levage séparé (44) d'un module global ou de mât auxiliaire (11d) et on amène le module global ou de mât auxiliaire (11d) en même temps que la pale de rotor (9a) dans sa position de montage au moyen de la nacelle de levage (10), puis on positionne la pale de rotor (9a) au moyen du dispositif de levage (44) par rapport à la nacelle motrice (7) et on la fixe à l'axe (8) de celle-ci.

10. Dispositif pour le montage d'une structure (4) formée de plusieurs modules (1, 2, 3) disposés l'un au-dessus de l'autre, comme une éolienne ou analogue, en particulier pour la mise en oeuvre d'un procédé selon l'une quelconque des revendications précédentes, avec un mât auxiliaire (11) et une nacelle de levage (10) guidée sur celui-ci, qui est déplaçable entre une première position, dans laquelle elle peut recevoir un module de structure à monter (1, 2, 3), et une deuxième position au niveau de la position de montage du module de structure à monter (1, 2, 3) sur un module de structure déjà érigé (1, 2, 3), dans lequel la nacelle de levage (10) est guidée de telle manière qu'un contact de la nacelle de levage (10) avec le ou les module(s) de structure déjà érigés(s) (1, 2, 3) soit évité au moins pendant le déplacement de la nacelle de levage (10) le long du mât auxiliaire (11), **caractérisé en ce que**
- le mât auxiliaire (11) est une construction autoportante et modulaire et peut être disposé parallèlement à la structure à ériger (4) et à côté de celle-ci, dans lequel la longueur d'un module de mât auxiliaire autoportant (11a, 11b, 11d) correspond sensiblement à la longueur d'un module de structure (1, 2, 3);
- dans lequel un module de mât auxiliaire autoportant respectif (11a, 11b, 11d) peut être relié de façon séparable à un module de structure respectif (1, 2, 3) en un module global de telle manière que le module de mât auxiliaire autoportant (11a, 11b, 11d) d'un tel module global puisse supporter le poids de son module de structure (1, 2, 3); et
- dans lequel la nacelle de levage (10) est guidée sur le mât auxiliaire autoportant (11) dudit au moins un module de structure déjà érigé (1, 2, 3) de telle manière que, lors du déplacement de la nacelle de levage (10) le long du mât auxiliaire autoportant (11), on évite aussi bien un contact de la nacelle de levage (10) avec la structure (4) qu'une introduction dans la structure (4) de forces normales, transversales et de torsion et de moments de flexion provoqués par la nacelle de levage (10) et le vent agissant sur celle-ci, et dès lors les éventuels dommages mécaniques à la structure (4), afin de déplacer vers le haut les modules globaux formés respectivement d'un module de mât auxiliaire autoportant (11a, 11b, 11c) et d'un module de structure (1, 2, 3) au niveau de la position de montage,
dans lequel le module de mât auxiliaire présente un dispositif de réglage en hauteur pour le déplacement en hauteur d'un module de structure respectif (1, 2, 3) par rapport à son module de mât auxiliaire (11a, 11b, 11d), dans lequel le module de structure (1, 2, 3) peut être disposé à un niveau plus élevé que le module de mât auxiliaire (11a, 11b, 11d) et peut être abaissé au moins au niveau du module de mât auxiliaire (11a, 11b, 11d).

11. Dispositif selon la revendication 10, **caractérisé en ce que** la nacelle de levage (10) est équipée d'un dispositif de translation (28), qui peut être déplacé entre une position de transport latérale d'un module global et une position de montage plus centrale par rapport à celui-ci de son module de structure (1, 2, 3), essentiellement parallèlement au plan d'extension de la nacelle de levage (10).

12. Dispositif selon l'une des revendications 10 ou 11, **caractérisé en ce que** la nacelle de levage (10) est équipée d'un système d'équilibrage des couples de rotation (30), qui est conçu pour l'équilibrage du couple de rotation exercé par le poids d'un module global transporté en fonction de sa position sur la nacelle de levage (10), dans lequel le système d'équilibrage des couples de rotation (30) comprend en particulier au moins un contrepoids (31, 32) disposé sur la nacelle de levage (10), qui est guidé de façon déplaçable sur la nacelle de levage (10) et/ou dont la masse peut être modifiée.

13. Dispositif selon l'une quelconque des revendications 10 à 12, **caractérisé en ce que** les modules de mât auxiliaire (11a, 11b, 11c) des modules globaux présentent des éléments d'emboîtement (19, 19a) disposés frontalement, afin de les aligner lors de leur érection sur le module de mât auxiliaire (11a, 11b, 11c) supérieur déjà érigé, dans lequel en particulier un raccord rapide est associé à des éléments d'emboîtement (19, 19a) alignés les uns avec les autres de modules de mât auxiliaire voisins (11a, 11b, 11c) pour la fixation de ceux-ci l'un à l'autre.

14. Dispositif selon l'une quelconque des revendications 10 à 13, **caractérisé en ce que** le mât auxiliaire (11) ou le module de mât auxiliaire (11a, 11b, 11d) entoure au moins partiellement, en particulier essentiellement en forme de U ou en forme de V, la structure (4) ou le module de structure (1, 2, 3).

15. Dispositif selon la revendication 14, **caractérisé en ce que** le mât auxiliaire (11) ou le module de mât auxiliaire (11a, 11b, 11d) entoure essentiellement en forme de U ou en forme de V la structure (4) ou le module de structure (1, 2, 3), dans lequel les extrémités libres de la structure en U ou en V peuvent être reliées l'une à l'autre de façon séparable au moyen d'éléments de renforcement (12), de telle manière que la structure (4) ou le module de structure (1, 2, 3) soit entouré(e) de tous les côtés par le mât auxiliaire (11) ou le module de mât auxiliaire (11a, 11b, 11d).

16. Dispositif selon l'une quelconque des revendications 10 à 15, **caractérisé en ce que** l'entraînement de la nacelle de levage (10) comprend au moins une crémaillère (15) disposée sur les modules de mât auxiliaire (11a, 11b, 11c) du mât auxiliaire (11) ainsi qu'au moins une roue dentée (16) disposée sur la nacelle de levage (10), qui engrène dans la crémaillère (15).

17. Dispositif selon l'une quelconque des revendications 10 à 16, **caractérisé en ce qu'**au moins un module global ou de mât auxiliaire (11d) est équipé d'un dispositif de levage séparé (44), qui est conçu pour recevoir au moins une pale de rotor (9a) d'une éolienne.
